# EUROPEAN PATENT SPECIFICATION

(11) **EP 1 581 826 B1**
(45) Date of publication and mention of the grant of the patent: **21.03.2007**
(21) Application number: 04702492.2
(22) Date of filing: 15.01.2004
(51) Int. Cl.: G11B 7/0037, G11B 7/085, G11B 7/24, G11B 23/40, G11B 23/42

(54) **RADIAL POSITION REGISTRATION FOR A TRACKLESS OPTICAL DISC SURFACE**
BESTIMMEN DER RADIALEN POSITION EINER SPURLOSEN OBERFLÄCHE EINER OPTISCHEN PLATTE
ENREGISTREMENT DE POSITION RADIALE POUR UNE SURFACE DE DISQUE OPTIQUE SANS PISTE

(30) Priority: 17.01.2003 US 347074
(43) Date of publication of application: 05.10.2005
(73) Proprietor: Hewlett-Packard Development Company, L.P., Houston, TX 77070 (US)
(72) Inventor: HANKS, Darwin Mitchel, Fort Collins, Colorado 80525 (US)
(74) Representative: Jackson, Richard Eric
(86) International application number: PCT/US2004/000973
(87) International publication number: WO 2004/068194

(56) References cited:
- WO-A-99/54141
- US-A1- 2002 030 705
- US-A1- 2002 191 517

## Description

### TECHNICAL FIELD

The present disclosure relates generally to optical discs, and more particularly, to determining a radial position on a trackless surface of an optical disc.

### BACKGROUND

An optical disc, such as a compact disc (CD), is an electronic data storage medium that can be written to and read using a low-powered laser beam. Optical disc technology first appeared in the marketplace with the CD, which is typically used for electronically recording, storing, and playing back audio, video, text, and other information in digital form. A digital versatile disc (DVD) is another more recent type of optical disc that is generally used for storing and playing back movies because of its ability to store much more data in the same space as a CD.

CDs were initially a read-only storage medium that stored digital data as a pattern of bumps and flat areas impressed into a piece of clear polycarbonate plastic through a complex manufacturing process. However, average consumers can now burn their own CDs with CD players capable of burning digital data into CD-Rs (CD-recordable discs) and CD-RWs (CD-rewritable discs). CD-Rs have a layer of translucent photosensitive dye that turns opaque in areas that are heated by a laser. Areas of opaque and translucent dye vary the disc reflectivity which enables data storage in a permanent manner analogous to the bumps and flat areas in conventional CDs. CD-RWs represent the bumps and flat areas of conventional CDs through phase shifts in a special chemical compound. In a crystalline phase the compound is translucent, while in an amorphous phase it is opaque. By shifting the phase of the compound with a laser beam, data can be recorded onto and erased from a CD-RW.

Methods for labeling the non-data side of such optical discs with text and images, for example, have continued to develop as consumers desire more convenient ways to identify the data they've burned onto their own CDs. Basic methods for labeling a disc include physically writing on the non-data side with a permanent marker (e.g, a sharpie marker) or printing out a paper sticker label and sticking it onto the non-data side of the disc. Other physical marking methods developed for implementation in conventional CD players include ink jet, thermal wax transfer, and thermal dye transfer methods. Still other methods use the laser in a conventional CD player to mark a specially prepared CD surface. Such methods apply equally to labeling CDs and DVDs.

US patent application 2002/191517 describes a visible light characteristic changing layer formed from photosensitive or heat-sensitive material is formed in a location which can be viewed from a part of a label surface of an optical disc. The optical disc is set on a turntable of an optical disc unit while the label surface of the optical disc is directed downward. The optical disc and an optical pickup are moved mutually along the plane of the optical disc. In synchronism with the relative movement, the power of a laser beam output from the optical pickup is modulated in accordance with image data, such as characters or graphic images to be printed, and the laser beam is emitted onto the visible light characteristic changing layer. As a result of the visible light characteristic changing layer being exposed to the laser beam, a visible-light reflectivity of the visible light characteristic changing layer is changed, thereby forming a image corresponding to the image data on the label surface.

PCT application WO 99/54141 describes a method and apparatus for receiving an image source representative of an image to be printed on an outer surface of a rotating media is described. The image source has a plurality of image points. A radial printing system is described that includes an imaging system configured to convert the plurality of image points into a polar-based representation of the image and a head assembly coupled to the imaging system for outputting the polar-based representation of the image onto the rotating media. The rotating media may represent a compact disc, wherein an inner surface of the compact disc is configured to store digital data.

A problem with labeling CDs is that there are no tracks or other markings on the label surface (i.e., the non-data side, or top side) of the CD to determine radial positioning. Therefore, the radial positioning of a laser spot, for example, to begin printing a label or to append a previously marked label can result in misapplied labels.

For example, a label may overlap onto itself if the label data is printed at a radius that is too close to the inner diameter of the disc. Likewise, a label may have gaps if the label data is printed at a radius that is too far from the inner diameter of the disc.

Accordingly, the need exists for a way to determine radial positioning on an optical disc surface that has no tracks or other markings, such as the non-data or label surface of an optical disc.

US patent application 2002/030705 discloses a method for detecting an angular position of a rotating media having a native wobble signal. Prior to recording data on the rotating media timing information is obtained from the native wobble signal in the rotating media, over a substantial portion of a pre-recorded media area of the rotating media. An angular position of the rotating media is determined from the timing information. The determined angular position is used to accurately print an image onto the rotating media.

### SUMMARY

A reference pattern on the non-data side of an optical disc can be scanned and used to position a laser spot at an absolute radial position on the disc.

### BRIEF DESCRIPTION OF THE DRAWINGS

The same reference numbers are used throughout the drawings to reference like components and features.
Fig. 1 illustrates an exemplary environment for implementing radial position registration on a trackless optical disc surface.
Fig. 2 illustrates an exemplary embodiment of an optical disc device suitable for implementing radial position registration on a trackless optical disc surface.
Fig. 3 illustrates an exemplary embodiment of an optical data storage disc having an exemplary reference pattern on a non-data side.
Figs. 4, 5, and 6 illustrate examples of using a reference pattern to generate a signal whose duty cycle is used to register an absolute radial position on an optical data storage disc.
Fig. 7 illustrates an exemplary embodiment of an optical data storage disc having another exemplary reference pattern on a non-data side.
Figs. 8, 9, 10, 11, and 12 illustrate examples of using a reference pattern to generate a signal whose amplitude is used to register an absolute radial position on an optical data storage disc.
Figs. 13, 14, and 15 are flow diagrams illustrating example methods for registering a radial position on a trackless optical disc surface.

### DETAILED DESCRIPTION

### Overview

The following discussion is directed to systems and methods for determining a radial position on a trackless surface of an optical data storage disc. A reference pattern on the non-data side (or label side) of an optical data storage disc enables optical disc devices to register the position of a laser to an absolute radial location on the disc's non-data side. The absolute radial location serves as a reference track that all radial positioning can be referenced to. The disclosed systems and methods provide various advantages including, for example, an assurance that label writing to the non-data side of the disc begins at a correct radius that is not too close to either the inner or outer diameter of the disc, and that labels can be updated or appended after a disc has been removed from a disc device by referencing an absolute radial position.

### Exemplary Environment

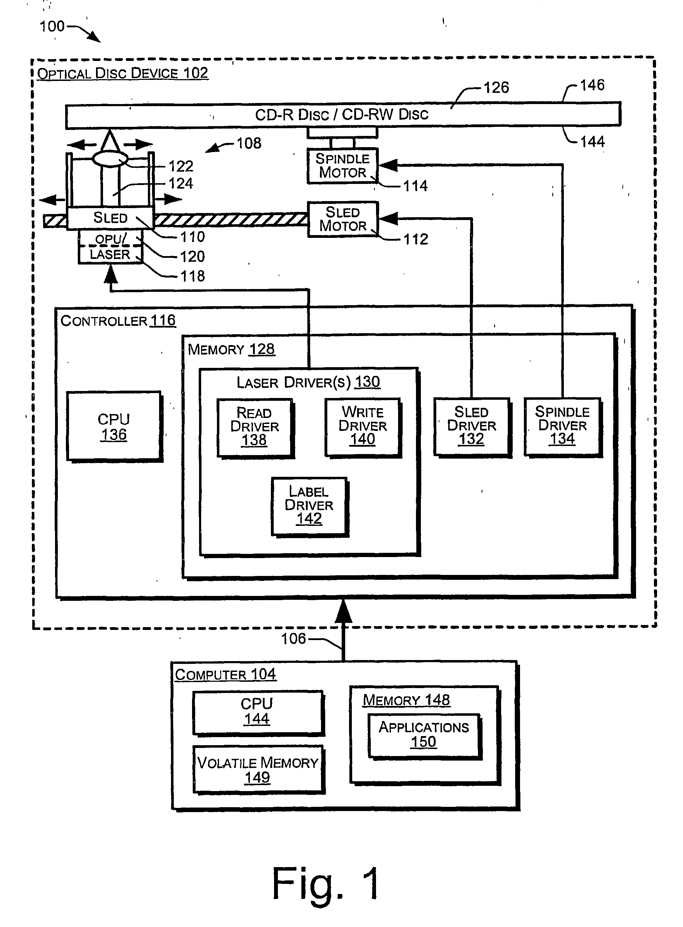

Fig. 1 illustrates an exemplary environment for implementing one or more embodiments of a system for radial position registration on a trackless optical disc surface. The exemplary environment 100 of Fig. 1 includes an optical disc device 102 operatively coupled to a host computer or recording system 104 through a network 106.

Network 106 is typically an ATAPI (Advanced Technology Attachment Packet Interface) device interface, which is one of many small computer parallel or serial device interfaces. Another common computer interface is SCSI (small computer system interface), which is a generalized device interface for attaching peripheral devices to computers. SCSI defines the structure of commands, the way commands are executed, and the way status is processed. Various other physical interfaces include the Parallel Interface, Fiber Channel, IEEE 1394, USB (Universal Serial Bus), and ATA/ATAPI. ATAPI is a command execution protocol for use on an ATA interface so that CD-ROM and tape drives can be on the same ATA cable with an ATA hard disk drive. ATAPI devices generally include CD-ROM drives, CD-Recordable drives, CD-Rewritable drives, DVD (digital versatile disc) drives, tape drives, super-floppy drives (e.g., ZIP and LS-120), and so on.

Optical disc device 102 is typically implemented as a writable CD (compact disc) player/drive that has the ability to write data onto an optical disc such as a CD-R (CD-recordable disc) and a CD-RW (CD-rewritable disc). Such writable CD devices 102 are often called CD burners. More generally, an optical disc device 102 may include, for example, a stand-alone audio CD player that is a peripheral component in an audio system, a CD-ROM drive integrated as standard equipment in a PC (personal computer), a DVD (digital versatile disc) player, and the like. Therefore, although optical disc device 102 is discussed herein as being a CD player/burner, optical disc device 102 is not limited to such an implementation.

As illustrated in Fig. 1, an exemplary optical disc device 102, such as a CD burner, generally includes a laser assembly 108, a sled 110 or carriage for laser assembly 108, a sled motor 112, a disc or spindle motor 114, and a controller 116. Laser assembly 108 mounted on sled 110 includes a laser source 118, an optical pickup unit (OPU) 120, and a focusing lens 122 to focus a laser beam 124 to a laser spot on a writable CD 126 (e.g., a CD-R or CD-RW). OPU 120 further includes four photodiodes and a beam splitter (not shown) for tracking and focus feedback. In general, tracking the data side (144) of a conventional disc 126 with laser assembly 108 for reading and writing data is based on radial position registration information that is readily available from, a continuous data track that spirals out from the center of the disc 126. Tracking is achieved through a conventional push-pull tracking scheme involving sensing reflected interference with the four photodiodes.

Controller 116 typically includes a memory 128 such as Random Access Memory (RAM) and/or non-volatile memory for holding computer/processor-readable instructions, data structures, program modules, an image to be printed as a label on disc 126, and other data for controller 116. Accordingly, memory 128 includes laser/OPU drivers 130, sled driver 132, and spindle driver 134. Sled driver 132 and spindle driver 134 execute in conjunction on processor 136 to control, respectively, the radial position of laser assembly 108 with respect to disc 126 and the rotational speed of disc 126. The speed of the disc 126 and radial location of laser assembly 108 are typically controlled so that data on the disc moves past the laser beam 124 at a constant linear velocity (CLV).

Laser/OPU drivers 130 include a read driver 138, a write driver 140, and a label driver 142. Laser/OPU drivers 130 are executable on processor 136 to control laser 118 and OPU 120 when reading data from the data side 144 of disc 126, writing data to the data side 144 of disc 126, and writing a label (e.g., text, graphics) to the non-data side 146 (i.e., the top side or label side) of disc 126 when the disc is flipped over in optical disc device 102. While spindle driver 134 and sled driver 132 rotate data on disc 126 past laser beam 124 at CLV, read driver 138 controls OPU 120 and the intensity of the laser 118 output to read the data by sensing light reflected off the metallic reflective layer of disc 126 (i.e., a CD-R disc) or the phase-change layer of disc 126 (i.e., a CD-RW disc). Similarly, write driver 140 controls OPU 120 and the intensity of the laser 118 output to write data to disc 126. In response to data from write driver 140, laser 118 generates pulsating laser beams 124 to record data onto the data side 144 of a disc 126.

Label driver 142 is configured to execute on processor 136 when a disc 126 is flipped over in the optical disc device 102 so the non-data side 146 of the disc 126 is facing the laser assembly 108. In general, label driver 142 receives label data (e.g., text data, image data) from computer 104 that it uses to control laser 118 for writing a label into the non-data side 146 of disc 126. In response to data from label driver 142, laser 118 generates pulsating laser beams 124 to record label data onto the non-data side 146 of disc 126. However, the conventional push-pull tracking scheme mentioned above for tracking the data side of a disc 126 is not available for tracking the non-data side 146 of the disc 126 because conventional discs (e.g., CD-Rs, CD-RWs, DVDs) have no tracks or other radial position registration information available on their non-data sides 146. Accordingly, the exemplary embodiments section below discusses a radial position registration on a trackless surface of an optical data storage disc 126.

Computer 104 can be implemented as a variety of general purpose computing devices including, for example, a personal computer (PC), a laptop computer, and other devices configured to communicate with optical disc device 102. Computer 104 typically includes a processor 144, a volatile memory 149 (i.e., RAM), and a nonvolatile memory 148 (e.g., ROM, hard disk, floppy disk, CD-ROM, etc.). Nonvolatile memory 148 generally provides storage of computer/processor-readable instructions, data structures, program modules and other data for computer 104. Computer 104 may implement various application programs 150 stored in memory 148 or volatile memory 149 and executable on processor 144 to provide a user with the ability to manipulate or otherwise prepare in electronic form, data such as music tracks to be written to the data side 144 of a disc 126 by disc device 102. Such applications 150 on computer 104 may also enable the preparation of a label, such as text and/or graphics, to be written to the non-data side 146 of a disc 126. In general, computer 104 outputs host data to disc device 102 in a driver format that is suitable for the device 102, which the disc device 102 converts and outputs in an appropriate format onto a writable CD (e.g., CD-R, CD-RW).

### Exemplary Embodiments

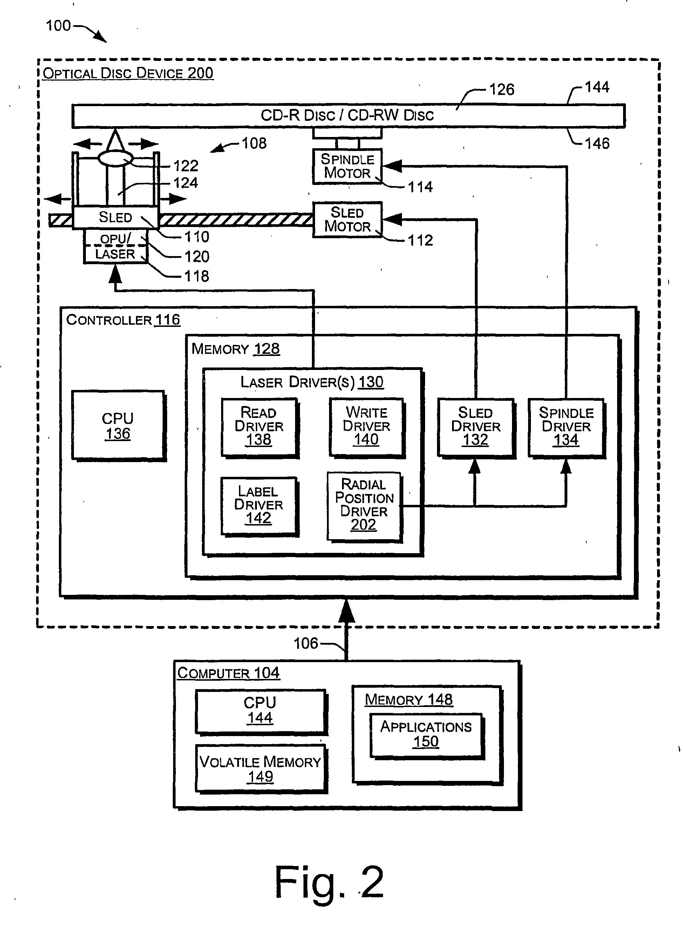

Fig. 2 illustrates an exemplary embodiment of an optical disc device 200 suitable for implementing radial position registration on a trackless optical disc surface (e.g., the non-data side 146 of a disc 126) in an environment 100 such as that discussed above with reference to Fig. 1. The exemplary embodiment of the optical disc device 200 in Fig. 2 is configured in the same manner as the optical disc device 102 of Fig. 1, with the exception of radial position driver 202 stored in memory 128 and executable on processor 136. In addition, the exemplary embodiment of the optical disc device 200 presumes that an optical data storage disc 126 is inserted in the device 200 with the non-data side 146 toward the laser assembly 108 (i.e., with the top side 146 of the disc 126 facing down). Furthermore, the exemplary embodiment of the optical disc device 200 presumes that an optical data storage disc 126 may include a reference pattern on its non-data side 146.

Radial position driver 202 is generally configured to determine whether or not an optical disc 126 includes a reference pattern on its non-data side 146 from which an absolute radial position can be determined. To this end, radial position driver 202 controls spindle motor 114, sled motor 112, and laser assembly 108 in a manner similar to that discussed above in order to scan the disc 126 for a reference pattern or some other mark that indicates a reference pattern is present on the non-data side 146 of disc 126. If a reference pattern is present, radial position driver 202 controls spindle motor 114, sled motor 112, and laser assembly 108 to scan the reference pattern and register the laser beam 124 (i.e., the laser spot from the laser beam 124) to an absolute radial position with respect to the disc 126. The registration process is discussed further below with regard to two exemplary reference patterns.

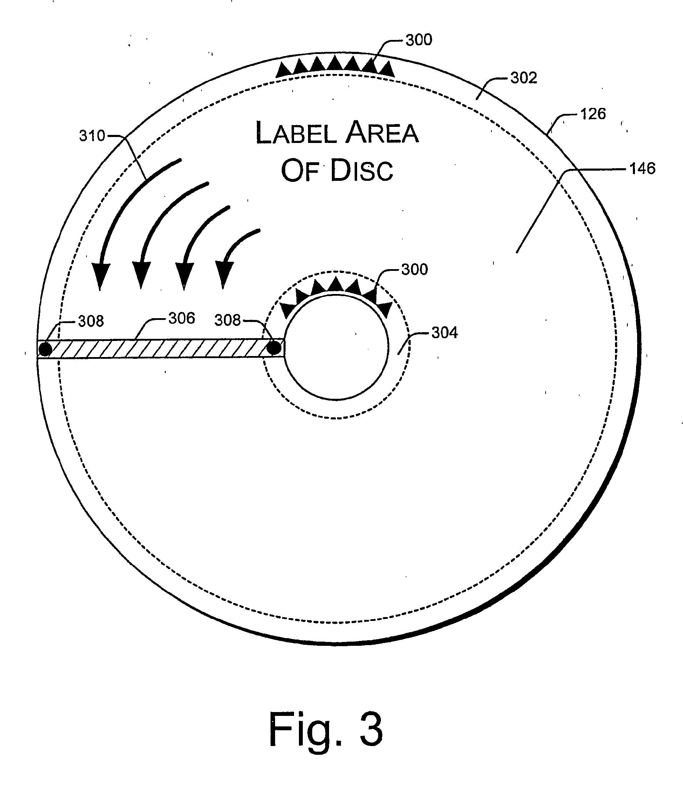

Fig. 3 illustrates one embodiment of an optical data storage disc 126 having an exemplary reference pattern on a non-data side 146 that enables registration of an absolute radial position by the optical disc device 200 of Fig. 2. The non-data side 146 (i.e., the label side) of the disc 126 is displayed in Fig. 3. The Fig. 3 embodiment shows reference pattern 300 as a sawtooth pattern located in a region on disc 126 at an extreme outer diameter 302 and an extreme inner diameter 304. Although the reference pattern 300 is shown in both locations 302 and 304 in the Fig. 3, in some circumstances the pattern 300 may only be located in one or the other of these locations, and not both. Furthermore, the inner and outer diameters, 302 and 304, are preferred locations for a reference pattern 300 in order that the label area of the disc 126 can remain free for labeling. However, it is noted that this description is not intended to limit the location of reference patterns to the inner and outer diameters 302 and 304 of disc 126, and that such patterns might also be located elsewhere on disc 126.

Fig. 3 further illustrates part of the sled mechanism 306 shown in Figs. 1 and 2 over which a sled 110 carries a laser assembly 108. At either end of this sled mechanism 306, and in both the extreme outer diameter 302 and extreme inner diameter 304 regions of disc 126, a laser spot 308 is shown. Direction arrows 310 indicate the direction of rotation of disc 126. Although not to scale, laser spot 308 is intended to illustrate how a reference pattern 300 is scanned as the disc 126 rotates the pattern 300 past the laser spot 308, either on the extreme inner diameter 304 or the extreme outer diameter 302 of the disc 126.

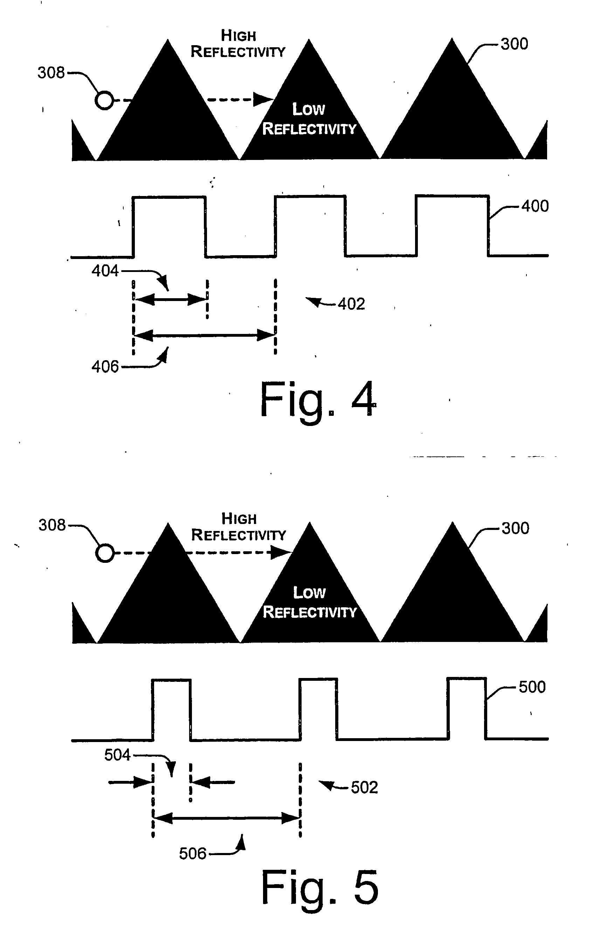

The patterns of light and dark in the reference pattern 300 (see also Figs. 4-6) can be formed on disc 126 by various processes such as silk screening, etching or embossing. The dark patterned areas of reference pattern 300 represent dull areas of low reflectivity (Figs. 4-6) on disc 126, while the light patterned areas (i.e., the areas that are not marked) represent shiny areas of high reflectivity (Figs. 4-6) on disc 126. In general, scanning areas of varying reflectivity on a disc 126 generates a reflectivity signal through the OPU 120 (Fig. 2) whose amplitude changes in response to the changing reflectivity of the disc 126.

The exemplary sawtooth pattern 300 of Fig. 3 is further illustrated in Figs. 4-6. Figs. 4-6 demonstrate the use of the sawtooth pattern 300 to register or determine an absolute/reference radial position of a laser beam 124 (i.e., the laser spot 308 of Fig. 3) in the optical disc device 200 of Fig. 2 based on the timing of pulses in a reflectivity pattern. The absolute/reference radial position is a radial location within the reference pattern 300 that can be used as a reference track to which all radial positioning can be referenced. Each of the Figs. 4-6 illustrates the exemplary sawtooth pattern, a reflectivity signal response generated by the OPU 120 (Fig. 2) when the laser assembly 108 scans the pattern with a laser spot 308, and the relative pulse durations of the reflectivity signal. As shown in Figs. 4-6, the peaks and valleys of the sawtooth pattern 300 define a slanted interface between the low reflectivity region and the high reflectivity region of disc 126.

Fig. 4 illustrates the case where the laser spot 308 is located at the absolute/reference radial position. As the laser spot 308 moves between the low and high reflectivity regions in, the sawtooth pattern 300 on disc 126, the OPU 120 generates a reflectivity signal 400 based on the amount of light reflecting off the disc 126. Because the laser spot 308 in Fig. 4 is centered midway between the peaks and valleys of the sawtooth pattern 300, the reflectivity signal 400 has a (nearly) 50% duty cycle. That is, the ratio of the pulse duration 404 to the pulse period 406 is (nearly) 50%. The pulses 402 in the reflectivity signal 400 of Fig. 4 are rectangular in shape (i.e., saturated at the top and bottom) because the laser spot 308 is very small by comparison to the sawtooth pattern 300, and it is therefore either completely within a low reflectivity region or completely within a high reflectivity region as it scans the pattern 300. In addition, the laser spot 308 is traveling very fast relative to the sawtooth pattern 300 and therefore traverses the interface between the low and high reflectivity regions virtually instantaneously. Thus, transitions between high and low signal saturations in the reflectivity signal 400 are also virtually instant, and they appear as straight vertical lines. It is noted that the sawtooth pattern 300 is only one example of a pattern that may achieve this type of response, and that other patterns having similarly slanted interfaces between two surfaces of different reflectivities relative to the radius of the disc 126 might also be useful to produce similar results.

Referring again to the particular optical disc device embodiment of Fig. 2, the radial position driver 202 is further configured to analyze the duty cycle of the reflectivity signal 400 as the reference pattern 300 is being scanned, and to adjust the laser assembly 108 position (i.e., the laser spot 308 position) by controlling the sled motor 114 until the duty cycle is brought within a given threshold range. If the duty cycle is below the threshold range, the laser assembly 108 (laser spot 308) is moved in a first direction that brings the duty cycle within the threshold range. If the duty cycle is above the threshold range, the laser assembly (laser spot 308) is moved in a second direction that brings the duty cycle within the threshold range. The threshold range for the duty cycle is typically set to be within a percentage point or two around 50% (e.g., 49% to 51% duty cycle range).

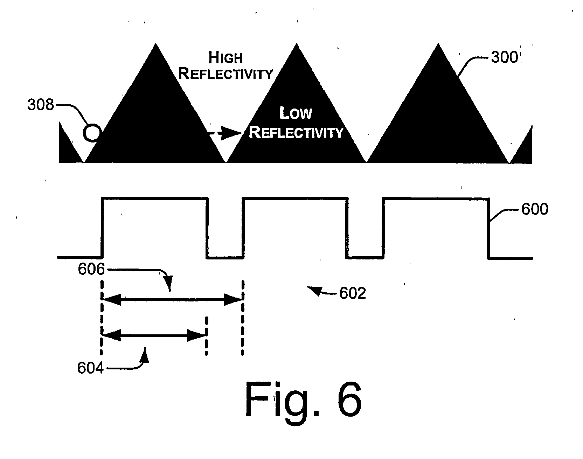

Fig. 5 illustrates the case where the laser spot 308 is located higher on the sawtooth pattern 300 than the absolute/reference radial position. That is, the laser spot 308 is at a radial distance that is too far from the inner diameter of the disc 126. As discussed above, in this scenario the radial position driver 202 measures pulse widths 502 to analyze the duty cycle (i.e., the ratio of the pulse duration 504 to the pulse period 506) and determine if the laser spot 308 needs an adjustment toward the absolute/reference radial position. It is clear from Fig. 5 that the laser spot 308 is not positioned midway between the peaks and valleys of the sawtooth pattern 300. Rather, the laser spot 308 is positioned too near the peaks of the low reflectivity region of the sawtooth pattern 300. The duty cycle for the reflectivity signal 500 illustrates this because the ratio of pulse duration 504 to pulse period 506 is significantly below 50%. Upon determining that the duty cycle is below a given threshold (e.g., 49% to 51%), the radial position driver 202 controls the sled motor 112 (Fig. 2) to adjust the laser assembly 108 position (i.e., the laser spot 308 position) until the duty cycle is brought within the given threshold range.

Fig. 6 illustrates the case where the laser spot 308 is located lower on the sawtooth pattern 300 than the absolute/reference radial position. That is, the laser spot 308 is at a radial distance that is too close to the inner diameter of the disc 126. As discussed above, in this scenario the radial position driver 202 measures pulse widths 602 to analyze the duty cycle (i.e., the ratio of the pulse duration 604 to the pulse period 606) and determine if the laser spot 308 needs an adjustment toward the absolute/reference radial position. It is clear from Fig. 6 that the laser spot 308 is not positioned midway between the peaks and valleys of the sawtooth pattern 300. Rather, the laser spot 308 is positioned too near the peaks of the high reflectivity region of the sawtooth pattern 300. The duty cycle for the reflectivity signal 600 illustrates this because the ratio of pulse duration 604 to pulse period 606 is significantly above 50%. Upon determining that the duty cycle is above a given threshold (e.g., 49% to 51%), the radial position driver 202 controls the sled motor 112 (Fig. 2) to adjust the laser assembly 108 position (i.e., the laser spot 308 position) until the duty cycle is brought within the given threshold range.

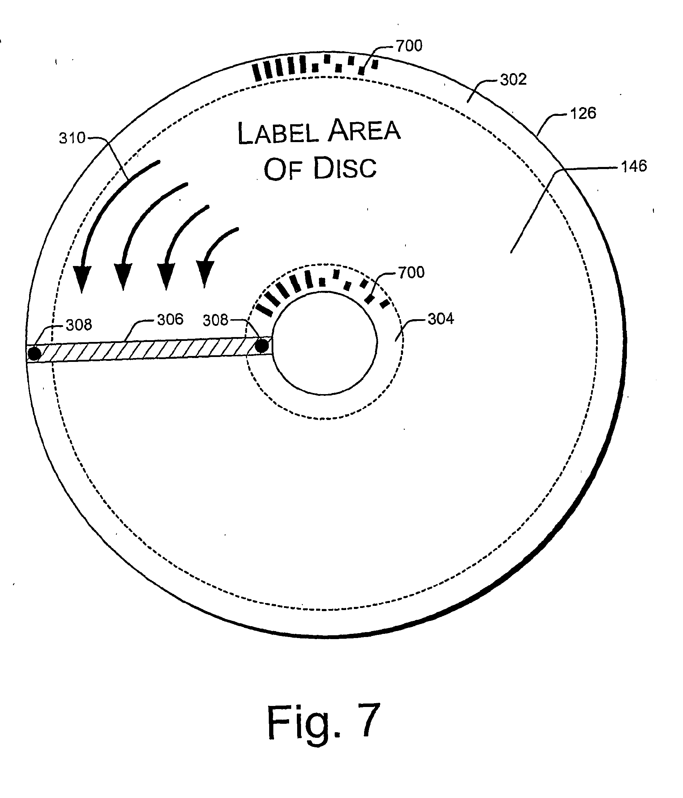

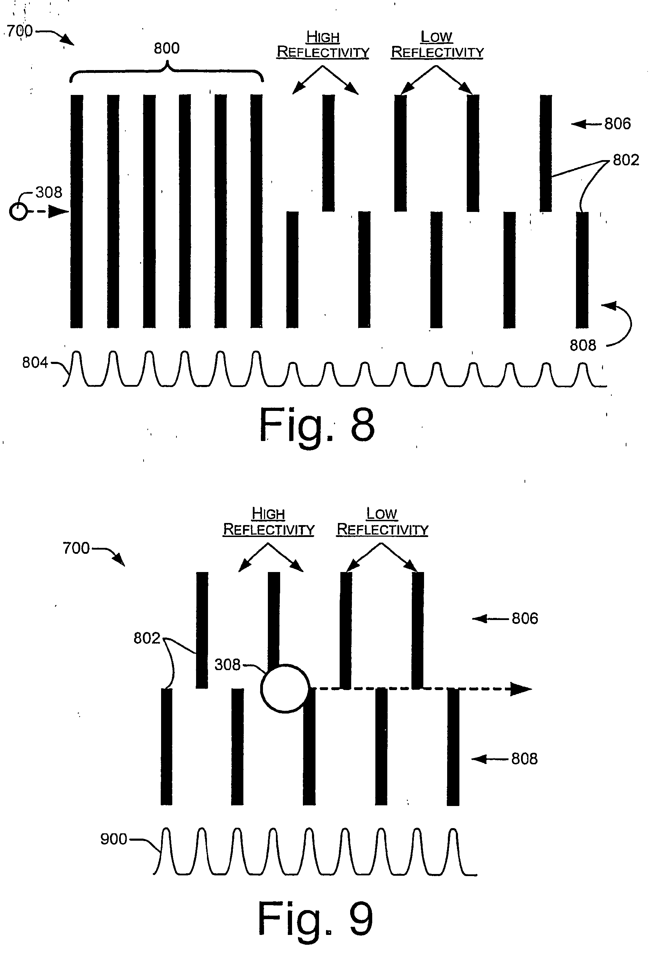

Fig. 7 illustrates another embodiment of an optical data storage disc 126 having an exemplary reference pattern on a non-data side 146 of the disc 126 which enables registration of an absolute radial position by the optical disc device 200 of Fig. 2. As in Fig. 3 above, the non-data side 146 (i.e., the label side) of the disc 126 is displayed in Fig. 7. The exemplary reference pattern 700 of the Fig. 7 embodiment includes alternating bars of low and high reflectivity regions that form a timing synchronization field, and two rows of adjacent half bars that are 180 degrees out ,of phase with one another as shown in Figs. 8-12. Reference pattern 700 is located on the disc 126 in the same manner as that discussed above with respect to the reference pattern 300 of Fig. 3. Thus, the alternating bar pattern 700 is typically located toward the extreme outer 302 and/or extreme inner 304 diameter of disc 126.

Like Fig. 3 above, Fig. 7 further illustrates part of the sled mechanism 306 for carrying a laser assembly 108 between the extreme diameters of disc 126. A laser spot 308 and direction arrows 310 illustrate how the reference pattern 700 is scanned as the disc 126 rotates the pattern 700 past the laser spot 308, either at extreme inner diameter-304 or extreme outer diameter 302 of the disc 126.

The exemplary bar pattern 700 of Fig. 7 is fully illustrated in Fig. 8 as including synchronization field 800 and the two half rows of stacked bars 802. Figs. 9-12 do not show the synchronization field 800 in pattern 700. However, the exclusion of synchronization field 800 in the patterns 700 of Figs. 9-12 is for purposes of illustration only, and is not intended to indicate that the synchronization fields 800 are absent from these patterns 700.

In the exemplary bar pattern 700 of Fig. 7, the radial reference position is an imaginary line between the two rows of adjacent half bars 802 as shown in Figs. 8-12. Referring to Fig. 8, a laser spot 308 first scans over synchronization field 800. The reflectivity signal 804 generated by the OPU 120 (Fig.2) while scanning the synchronization field 800 provides frequency information that is useful for analyzing the latter portion of the reflectivity signal 804 generated from scanning the two rows of adjacent half bars 802. For example, the frequency/timing information from the synchronization field 800 indicates which subsequent amplitude pulses in reflectivity signal 804 belong with the top half 806 of the half bars 802 and which subsequent amplitude pulses in reflectivity signal 804 belong with the bottom half 808 of the half bars 802.

Fig. 9 is a magnified view of the latter part of the Fig. 8 scan of pattern 700. It is clear from Fig. 9 that the laser spot 308 is traversing the pattern 700 at the midway point between the two rows 806 and 808, of adjacent half bars 802. Therefore, the laser spot 308 encounters low and high reflectivity bars equally, and the amplitude pulses in the reflectivity signal 804 generated by OPU 120 are all equal. Accordingly, the laser spot 308 is properly positioned at the radial reference position, and the radial position driver 202 (Fig. 2) does not need to make any correction to the laser assembly 108 radial position (i.e., the laser spot 308 radial position).

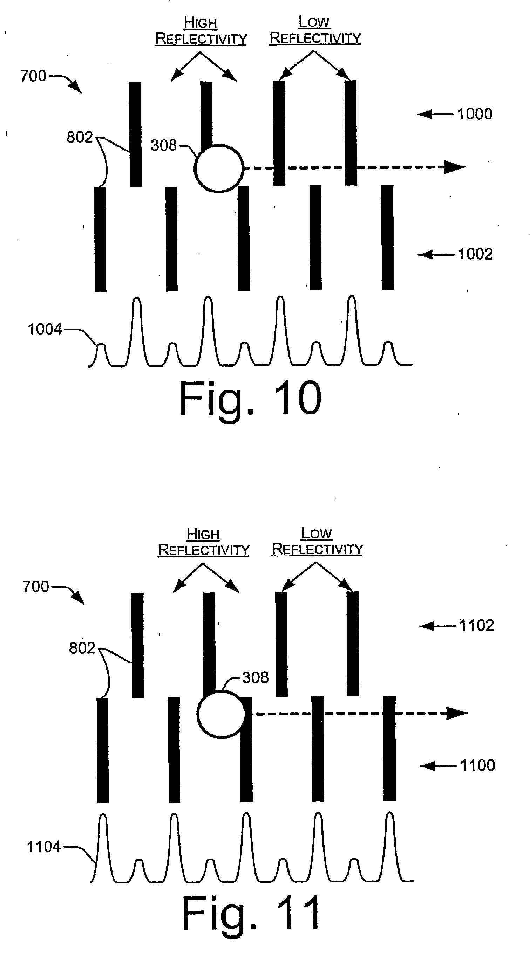

However, Fig. 10 illustrates the case where the laser spot 308 is located higher on the exemplary bar pattern 700 than the absolute/reference radial position. That is, the laser spot 308 is at a radial distance that is too far from the inner diameter of the disc 126. Therefore, the laser spot 308 encounters low reflectivity bars in the top half 1000 of the bar pattern 700 to a greater degree than it does in the bottom half 1002. The resulting reflectivity signal 1004 generated by the OPU 120 (Fig. 2) has larger amplitude pulses associated with the top half 1000 of the bar pattern 700 than with the bottom half 1002.

When analyzing the reflectivity signal 1004, the radial position driver 202 (Fig.2) samples every other amplitude pulse in signal 1004 (i.e., at half the frequency of the previously scanned synchronization field 800 frequency) for both the top half 1000 and bottom half 1002 of the bar pattern 700. Radial position driver 202 then calculates an average amplitude for both the top half 1000 and bottom half 1002 of the bar pattern 700 and compares the averages. The radial position driver 202 then drives the sled motor 112 to adjust the laser assembly 108 position (i.e., the laser spot 308 position) downward (i.e., radially inward) until the laser spot 308 reaches the absolute/reference radial position and the average reflectivity signal amplitudes for the top half 1000 and bottom half 1002 of the bar pattern 700 are equal or fall within a minimum threshold difference.

Fig. 11 illustrates the case where the laser spot 308 is located lower on the exemplary bar pattern 700 than the absolute/reference radial position. That is, the laser spot 308 is at a radial distance that is too close to the inner diameter of the disc 126. Therefore, the laser spot 308 encounters low reflectivity bars in the bottom half 1100 of the bar pattern 700 to a greater degree than it does in the top half 1102. The resulting reflectivity signal 1104 generated by the OPU 120 (Fig. 2) has larger amplitude pulses associated with the bottom half 1100 of the bar pattern 700 than with the top half 1102.

The radial position driver 202 (Fig.2) analyzes the reflectivity signal 1104 by sampling every other amplitude pulse in signal 1104 (i.e., at half the frequency of the previously scanned synchronization field 800 frequency) for both the top half 1102 and bottom half 1100 of the bar pattern 700. Radial position driver 202 then calculates an average amplitude for both the top half 1102 and bottom half 1100 of the bar pattern 700 and compares the averages. The radial position driver 202 then drives the sled motor 112 to adjust the laser assembly 108 position (i.e., the laser spot 308 position) upward (i.e., radially outward) until the laser spot 308 reaches the absolute/reference radial position and the average reflectivity signal amplitudes for the top half 1000 and bottom half 1002 of the bar pattern 700 are equal or fall within a minimum threshold difference.

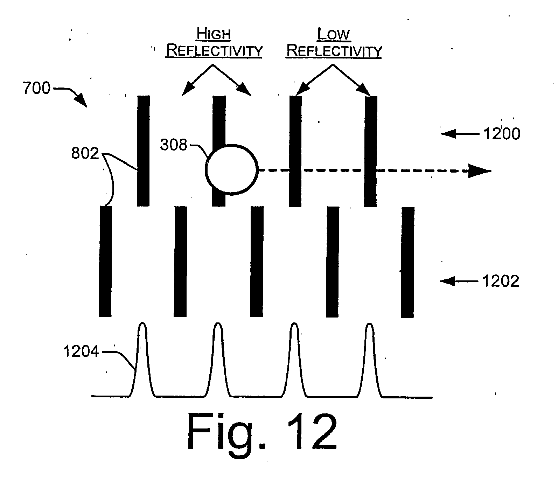

Fig. 12 illustrates another case where the laser spot 308 is located higher on the exemplary bar pattern 700 than the absolute/reference radial position. That is, the laser spot 308 is at a radial distance that is too far from the inner diameter of the disc 126. In this case, the laser spot 308 is located completely within the top half 1200 of bar pattern 700. Therefore, the laser spot 308 encounters low reflectivity bars in the top half 1200 of the bar pattern 700 and none in the bottom half 1202. The resulting reflectivity signal 1204 generated by the OPU 120 (Fig. 2) is therefore half the frequency of the previously scanned synchronization field 800 (Fig. 8), and only has amplitude pulses associated with the top half 1200 of the bar pattern 700 while no amplitude pulses are associated with the bottom half 1202. The phase of the amplitude pulses in the reflectivity signal 1204 therefore identify the pulses as being associated with the top half 1200 of the bar pattern 700.

The radial position driver 202 (Fig.2) samples every other amplitude pulse in signal 1204 (i.e., at half the frequency of the previously scanned synchronization field 800 frequency - see Fig. 8) for both the top half 1200 and bottom half 1202 of the bar pattern 700. The radial position driver 202 monitors the frequency of the amplitude pulses in the reflectivity signal 1204, which is only half the frequency of the previously scanned synchronization field 800. The radial position driver 202 also determines the phase of the amplitude pulses in the reflectivity signal 1204 from the previously scanned synchronization field 800. The phase of the amplitude pulses indicates that they are associated with the top half 1200 of the bar pattern 700 only. Based on the frequency and phase of the amplitude pulses in the reflectivity signal 1204, the radial position driver 202 drives the sled motor 112 to adjust the laser assembly 108 position (i.e., the laser spot 308 position) downward (i.e., radially inward) until the laser spot 308 reaches the absolute/reference radial position and the average reflectivity signal amplitudes for the top half 1200 and bottom half 1202 of the bar pattern 700 are equal or fall within a minimum threshold difference.

### Exemplary Methods

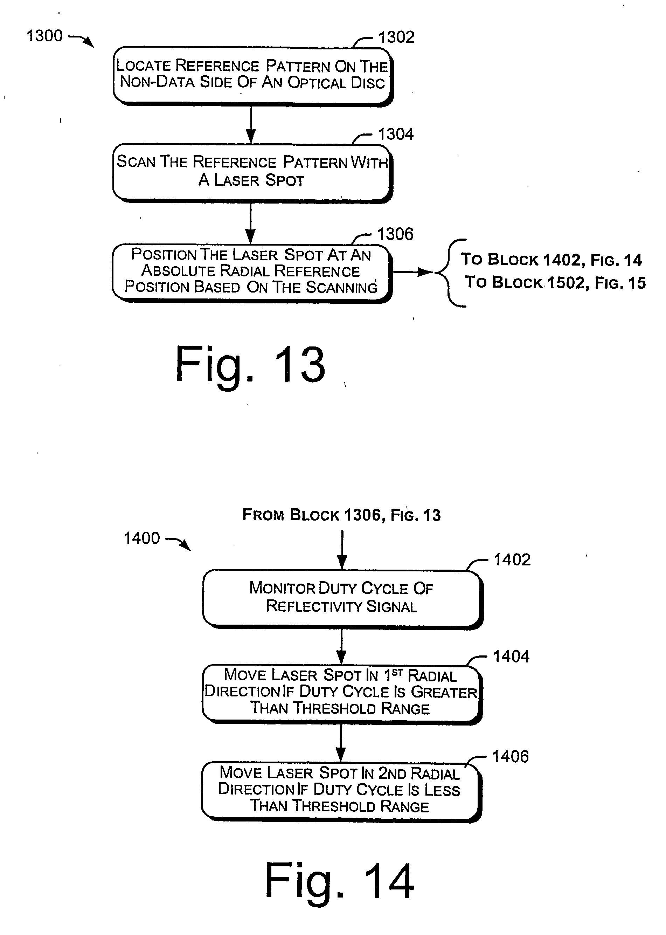

Example methods for registering a radial position on a trackless optical disc surface will now be described with primary reference to the flow diagrams of Figs. 13-15. The methods apply generally to the exemplary embodiments discussed above with respect to Figs. 2-12. The elements of the described methods may be performed by any appropriate means including, for example, by hardware logic blocks on an ASIC or by the execution of processor-readable instructions defined on a processor-readable media, such as a disk, a ROM or other such memory device.

Fig. 13 shows an exemplary method 1300 for registering a radial position on a trackless optical disc surface such as a CD-R, a CD-RW, a CD-ROM and a DVD. At block 1302, a reference pattern is located on the optical disc. The reference pattern is located on the non-data or label side of the disc. The reference pattern is typically located at either the extreme inner diameter of the disc or at the extreme outer diameter of the disc. Location of the reference pattern is done on an optical disc device such as a CD player that includes a CD burner capability. Location of the reference pattern occurs when the optical disc is placed in the optical disc device upside down so the device laser assembly has access to scan the non-data side of the disc.

At block 1304, the reference pattern is scanned with a laser spot. The laser assembly shines a laser beam onto the disc at the reference pattern and an optical pickup unit generates a reflectivity signal based on the light reflecting off the reference pattern and the disc surface.

At block 1306, the laser spot (laser beam) is positioned at a radial reference position based on position data from the scan of the reference pattern. The laser is positioned by analyzing the reflectivity signal generated from the reference pattern scan. Depending on the reference pattern, the laser positioning may be accomplished based on the amplitude pulses of the reflectivity signal or the duty cycle of the reflectivity signal.

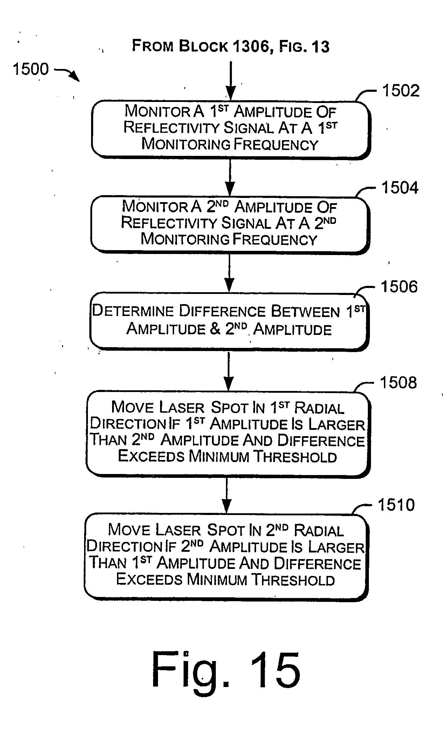

The method 1300 of Fig. 13 continues from block 1306 with method 1400 in Fig. 14 and method 1500 in Fig. 15. Fig. 14 therefore shows a continuation of an exemplary method 1400 for registering a radial position on a trackless optical disc surface.

At block 1402 of method 1400, the duty cycle of a reflectivity signal is monitored. As discussed above, the reflectivity signal is generated by the optical pickup unit during a scan of a reference pattern located on the non-data side of an optical disc. The particular type of reference pattern being used in this method is a sawtooth pattern that generates a reflectivity whose duty cycle can be used to register a radial position on an optical disc surface.

At block 1404, the laser spot is moved in a first radial direction if the duty cycle of the reflectivity signal is greater than a given threshold range. A duty cycle of 50% means the laser spot is located precisely at the radial reference position and that no radial adjustment of the laser spot is needed. The threshold range above or below which the radial position of the laser spot should be adjusted is typically from about 49% to about 51% duty cycle. At block 1406, the laser spot is moved in a second radial direction if the duty cycle of the reflectivity signal is less than the threshold range.

Fig. 15 also shows a continuation of an exemplary method 1500 for registering a radial position on a trackless optical disc surface. At block 1502 of method 1500, a first amplitude of the reflectivity signal is monitored at a first monitoring frequency. The first monitoring frequency is half of the frequency determined from a synchronization field within an alternating bar reference pattern. Monitoring the reflectivity amplitude at half the signal frequency picks up the amplitude pulses generated from just one side of the reference pattern.

At block 1504, a second amplitude of the reflectivity signal is monitored at a second monitoring frequency. The second monitoring frequency is the same as the first monitoring frequency but is 180 degrees out of phase. Therefore, the amplitude pulses generated from the other side of the reference pattern are picked up.

At block 1506, the difference between the first and second amplitudes is calculated. At block 1508, the laser spot is moved in a first radial direction if the first amplitude is larger than the second amplitude and the difference between the amplitudes exceeds a minimum threshold. At block 1510, the laser spot is moved in a second radial direction if the second amplitude is larger than the first amplitude and the difference between the amplitudes exceeds a minimum threshold. Blocks 1506 - 1510 determine how far the laser spot is to one side or the other side of the reference pattern being scanned. The farther the laser spot is to one side of the reference pattern, the larger the amplitude difference will be between the reflectivity responses for both sides of the pattern, and the farther the laser will be moved toward the center of the reference pattern. When the laser spot is at the radial reference location in the center of the reference pattern, there will be little or no amplitude differences in the reflectivity signal.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

Additionally, while one or more methods have been disclosed by means of flow diagrams and text associated with the blocks of the flow diagrams, it is to be understood that the blocks do not necessarily have to be performed in the order in which they were presented, and that an alternative order may result in similar advantages. Furthermore, the methods are not exclusive and can be performed alone or in combination with one another.

## Claims

1. A processor-readable medium comprising processor-executable instructions configured for:
locating (1302) a reference pattern (300, 700) on a non-data side (146) of an optical disc (126);
scanning (1304) the reference pattern (300, 700) with a laser spot (308); and
based on the scanning, positioning (1306) the laser spot (308) at an absolute radial position on the optical disc (126).

2. A processor-readable medium as recited in claim 1, wherein the scanning further comprises:
directing the laser spot (308) onto the reference pattern (300, 700) as the optical disc (126) rotates;
sensing reflected light as the reference pattern (300, 700) passes the laser spot (308); and
generating a reflectivity signal (400, 500, 600, 804, 1004, 1104, 1204) from the reflected light.

3. A processor-readable medium as recited in claim 2, wherein the positioning further comprises:
monitoring a duty cycle (1402) of the reflectivity signal (400, 500, 600, 804, 1004, 1104, 1204);
moving the laser spot (308) in a first radial direction (1404) if the duty cycle is greater than a threshold range; and
moving the laser spot (308) in second radial direction (1406) if the duty cycle is less than the threshold range.

4. A processor-readable medium as recited in claim 2, wherein the positioning further comprises:
monitoring a first amplitude (1502) of the reflectivity signal (400, 500, 600, 804, 1004, 1104, 1204) at a first monitoring frequency;
monitoring a second amplitude (1504) of the reflectivity signal (400, 500, 600, 804, 1004, 1104, 1204) at a second monitoring frequency;
determining a difference between the first amplitude and the second amplitude (1506);
moving the laser spot (308) in a first radial direction (1508); if the first amplitude is larger than the second amplitude and the difference exceeds a minimum threshold; and
moving the laser spot (308) in second radial direction (1510) if the second amplitude is larger than the first amplitude and the difference exceeds the minimum threshold.

5. A processor-readable medium as recited in claim 2, wherein the positioning further comprises:
monitoring a frequency of amplitude pulses in the reflectivity signal (400, 500, 600, 804, 1004, 1104, 1204);
determining a phase of the amplitude pulses; and
moving the laser spot (308) in a first radial direction based on the frequency and the phase.

6. A method of registering a radial reference position on a trackless optical disc surface comprising:
locating (1302) a reference pattern (300, 700) on a trackless side (146) of an optical disc (126);
scanning (1304) the reference pattern (300, 700) with a laser (308); and
positioning (1306) the laser (308) at a radial reference position on the optical disc (126) based on the scanning.

7. An optical disc device (102) comprising:
means for locating (1302) a reference pattern (300, 700) on a non-data side (146) of an optical disc (126);
means for scanning (1304) the reference pattern (300, 700) with a laser spot (308); and
means for positioning (1306) the laser spot (308) at an absolute radial position on the optical disc (126) according to the scanning.

8. An optical disc device (102) as recited in claim 7, further comprising:
means for directing the laser spot (308) onto the reference pattern (300, 700) as the optical disc rotates;
means for sensing reflected light as the reference pattern (300, 700) passes the laser spot (308); and
means for generating a reflectivity signal (400, 500, 600, 804, 1004, 1104, 1204) from the reflected light.

9. An optical disc device (102) as recited in claim 8, wherein the means for positioning further comprises:
means for monitoring a duty cycle of the reflectivity signal (400, 500, 600, 804, 1004, 1104, 1204);
means for moving the laser spot (308) in a first radial direction if the duty cycle is greater than a threshold range; and
means for moving the laser spot (308) in second radial direction if the duty cycle is less than the threshold range.

10. An optical disc device (102) as recited in claim 8, wherein the means for positioning further comprises:
means for monitoring a first amplitude (1502) of the reflectivity signal (400, 500, 600, 804, 1004, 1104, 1204) at a first monitoring frequency;
means for monitoring a second amplitude (1504) of the reflectivity signal (400, 500, 600, 804, 1004, 1104, 1204) at a second monitoring frequency;
means for determining a difference (1506) between the first amplitude and the second amplitude;
means for moving the laser spot (308) in a first radial direction if the first amplitude is larger than the second amplitude and the difference exceeds a minimum threshold; and
means for moving the laser spot (308) in second radial direction if the second amplitude is larger than the first amplitude and the difference exceeds the minimum threshold.

11. An optical disc (126) comprising:
a data side (144) configured to store data;
a non-data side (146) configured to receive a label;
a reference pattern (300, 700) on the non-data side (146) that defines a low reflectivity region and a high reflectivity region, and which allows registration of an absolute radial position.

12. An optical disc (126) as recited in claim 11, wherein the reference pattern (300, 700) is positioned on the non-data side (146) in at least one location selected from the group comprising:
an extreme inner diameter (304) of the optical disc (126); and
an extreme outer diameter (302) of the optical disc (126).

13. An optical disc (126) as recited in claim 11, wherein the reference pattern (300, 700) comprises a sawtooth pattern (300) of peaks and valleys defining a slanted interface between the low reflectivity region and the high reflectivity region and wherein the radius of the optical disc (126) varies along the slanted interface.

14. An optical disc (126) as recited in claim 11, wherein the reference pattern (700) further comprises:
a first row of low reflectivity bars (806, 1000, 1102, 1200); and
a second row of low reflectivity bars (808, 1002, 1100, 1202) adjacent to the first row and 180 degrees out of phase with the first row.

15. An optical disc (126) as recited in claim 14, wherein the reference pattern further (700) comprises a timing synchronization field (800) prior to the first row and the second row, the timing synchronization field (800) comprising a third row of low reflectivity bars (800).

## Patentansprüche

1. Ein prozessorlesbares Medium, das prozessorausführbare Befehle umfasst, das konfiguriert ist zum:
Lokalisieren (1302) eines Referenzmusters (300, 700) auf einer Nicht-Datenseite (146) einer optischen Platte (126);
Abtasten (1304) des Referenzmusters (300, 700) mit einem Laserpunkt (308); und
basierend auf dem Abtasten, Positionieren (1306) des Laserpunkts (308) an einer absoluten radialen Position auf der optischen Platte (126).

2. Ein prozessorlesbares Medium gemäß Anspruch 1, bei dem das Abtasten ferner folgende Schritte umfasst:
Richten des Laserpunkts (308) auf das Referenzmuster (300, 700), während sich die optische Platte (126) dreht;
Erfassen von reflektiertem Licht, während das Referenzmuster (300, 700) den Laserpunkt (308) passiert; und
Erzeugen eines Reflexionssignals (400, 500, 600, 804, 1004, 1104, 1204) von dem reflektierten Licht.

3. Ein prozessorlesbares Medium gemäß Anspruch 2, bei dem das Positionieren ferner folgende Schritte umfasst:
Überwachen eines Tastverhältnisses (1402) des Reflexionssiqnals (400, 500, 600, 804, 1004, 1104, 1204);
Bewegen des Laserpunkts (308) in einer ersten radialen Richtung (1404), falls das Tastverhältnis größer ist als ein Schwellenwertbereich; und
Bewegen des Laserpunkts (308) in einer zweiten radialen Richtung (1406), falls das Tastverhältnis geringer ist als der Schwellenwertbereich.

4. Ein prozessorlesbares Medium gemäß Anspruch 2, bei dem das Positionieren ferner folgende Schritte umfasst :
Überwachen einer ersten Amplitude (1502) des Reflexionssignals (400, 500, 600, 804, 1004, 1104, 1204) bei einer ersten Überwachungsfrequenz;
überwachen einer zweiten Amplitude (1504) des Reflexionssignals (400, 500, 600, 804, 1004, 1104, 1204) bei einer zweiten Überwachungsfrequenz;
Bestimmen einer Differenz zwischen der ersten Amplitude und der zweiten Amplitude (1506);
Bewegen des Laserpunkts (308) in einer ersten radialen Richtung (1508), falls die erste Amplitude größer ist als die zweite Amplitude, und die Differenz einen minimalen Schwellenwert überschreitet; und
Bewegen des Laserpunkts (308) in einer zweiten radialen Richtung (1510), falls die zweite Amplitude größer ist als die erste Amplitude und die Differenz den minimalen Schwellenwert überschreitet.

5. Ein prozessorlesbares Medium gemäß Anspruch 2, bei dem das Positionieren ferner folgende Schritte umfasst:
überwachen einer Frequenz von Amplitudenpulsen in dem Reflexionssignal (400, 500, 600, 804, 1004, 1104, 1204);
Bestimmen einer Phase der Amplitudenpulse; und
Bewegen des Laserpunkts (308) in einer ersten radialen Richtung basierend auf der Frequenz und der Phase.

6. Ein Verfahren zum Ausrichten einer radialen Referenzposition auf einer spurlosen optischen Plattenoberfläche, das folgende Schritte umfasst:
Lokalisieren (1302) eines Referenzmusters (300, 700) auf einer spurlosen Seite (146) einer optischen Platte (126);
Abtasten (1304) des Referenzmusters (300, 700) mit einem Laser (308); und
Positionieren (1306) des Lasers (308) an einer radialen Referenzposition auf der optischen Platte (126), basierend auf dem Abtasten.

7. Eine Optische-Platte-Vorrichtung (102), die folgende Merkmale umfasst:
eine Einrichtung zum Lokalisieren (1302) eines Referenzmusters (300, 700) auf einer Nicht-Datenseite (146) einer optischen Platte (126);
eine Einrichtung zum Abtasten (1304) des Referenzmusters (300, 700) mit einem Laserpunkt (308); und
eine Einrichtung zum Positionieren (1306) des Laserpunkts (308) an einer absoluten radialen Position auf der optischen Platte (126) gemäß dem Abtasten.

8. Eine Optische-Platte-Vorrichtung (102) gemäß Anspruch 7, die ferner folgende Merkmale umfasst:
eine Einrichtung zum Richten des Laserpunkts (308) auf das Referenzmuster (300, 700), während sich die optische Platte dreht;
eine Einrichtung zum Erfassen von reflektiertem Licht, während das Referenzmuster (300, 700) den Laserpunkt (308) passiert; und
eine Einrichtung zum Erzeugen eines Reflexionssignals (400, 500, 600, 804, 1004, 1104, 1204) von dem reflektiertem Licht.

9. Eine Optische-Platte-Vorrichtung (102) gemäß Anspruch 8, bei der die Einrichtung zum Positionieren ferner folgende Merkmale umfasst:
eine Einrichtung zum Überwachen eines Tastverhältnisses des Reflexionssignals (400, 500, 600, 804, 1004, 1104, 1204);
eine Einrichtung zum Bewegen des Laserpunkts (308) in einer ersten radialen Richtung, falls das Tastverhältnis größer ist als ein Schwellenwertbereich; und
eine Einrichtung zum Bewegen des Laserpunkts (308) in einer zweiten radialen Richtung, falls das Tastverhältnis geringer ist als der Schwellenwertbereich.

10. Eine Optische-Platte-Vorrichtung (102) gemäß Anspruch 8, bei der die Einrichtung zum Positionieren ferner folgende Merkmale umfasst:
eine Einrichtung zum Überwachen einer ersten Amplitude (1502) des Reflexionssignals (400, 500, .600, 804, 1004, 1104, 1204) bei einer ersten Überwachungsfrequenz;
eine Einrichtung zum Überwachen einer zweiten Amplitude (1504) des Reflexionssignals (400, 500, 600, 804, 1004, 1104, 1204) bei einer zweiten Überwachungsfrequenz;
eine Einrichtung zum Bestimmen einer Differenz (1506) zwischen der ersten Amplitude und der zweiten Amplitude;
eine Einrichtung zum Bewegen des Laserpunkts (308) in einer ersten radialen Richtung, falls die erste Amplitude größer ist als die zweite Amplitude und die Differenz einen minimalen Schwellenwert überschreitet; und
eine Einrichtung zum Bewegen des Laserpunkts (308) in einer zweiten radialen Richtung, falls die zweite Amplitude größer ist als die erste Amplitude und die Differenz den minimalen Schwellenwert überschreitet.

11. Eine optische Platte (126), die folgende Merkmale umfasst:
eine Datenseite (144), die konfiguriert ist, um Daten zu speichern;
eine Nicht-Datenseite (146), die konfiguriert ist, um ein Etikett aufzunehmen;
ein Referenzmuster (300, 700) auf der Nicht-Datenseite (146), die eine Region mit geringem Reflexionsvermögen und eine Region mit hohem Reflexionsvermögen definiert, und die die Ausrichtung einer absoluten radialen Position ermöglicht.

12. Eine optische Platte (126) gemäß Anspruch 11, bei der das Referenzmuster (300, 700) auf der Nicht-Datenseite (146) an zumindest einer Position positioniert ist, die aus der Gruppe ausgewählt ist, die folgendes umfasst:
einen extremen Innendurchmesser (304) der optischen Platte (126); und
einen extremen Außendurchmesser (302) der optischen Platte (126).

13. Eine optische Platte (126) gemäß Anspruch 11, bei der das Referenzmuster (300, 700) ein Sägezahnmuster (300) aus Spitzen und Tälern umfasst, die eine schräge Grenzfläche zwischen der Region mit geringem Reflexionsvermögen und der Region mit hohem Reflexionsvermögen definiert, und wobei der Radius der optischen Platte (126) entlang der schrägen Grenzfläche variiert.

14. Eine optische Platte (126) gemäß Anspruch 11, bei der das Referenzmuster (700) ferner folgende Merkmale umfasst:
eine erste Reihe von Stäben mit niedrigem Reflexionsvermögen (806, 1000, 1102, 1.200); und
eine zweite Reihe von Stäben mit niedrigem Reflexionsvermögen (808, 1002, 1100, 1202) benachbart zu der ersten Reihe und 180 Grad phasenverschoben mit der ersten Reihe.

15. Eine optische Platte (126) gemäß Anspruch 14, bei der das Referenzmuster (700) ferner ein Zeitsynchronisationsfeld (800) vor der ersten und der zweiten Reihe umfasst, wobei das Zeitsynchronisationsfeld (800) eine dritte Reihe von Stäben mit niedrigem Reflexionsvermögen (800) umfasst.

## Revendications

1. Support lisible par un processeur comprenant des instructions exécutables par un processeur, configuré pour :
localiser (1302) un motif de référence (300, 700) présent sur une face non gravable (146) d'un disque optique (126) ;
balayer (1304) le motif de référence (300, 700) avec un point laser (308) ; et
en fonction du balayage, positionner (1306) le point laser (308) en une position radiale absolue sur le disque optique (126).

2. Support lisible par un processeur selon la revendication 1, dans lequel le balayage comprend en outre les opérations consistant à :
diriger le point laser (308) sur le motif de référence (300, 700) durant la rotation du disque optique (126) ;
capter la lumière réfléchie tandis que le motif de référence (300, 700) aborde le point laser (308) ; et
générer un signal de réflectivité (400, 500, 600, 804, 1004, 1104, 1204) à partir de la lumière réfléchie.

3. Support lisible par un processeur selon la revendication 2, dans lequel le positionnement comprend en outre les opérations consistant à :
surveiller un rapport cyclique (1402) du signal de réflectivité (400, 500, 600, 804, 1004, 1104, 1204) ;
déplacer le point laser (308) dans une première direction radiale (1404) si le rapport cyclique est supérieur à une plage seuil ; et
déplacer le point laser (308) dans une seconde direction radiale (1406) si le rapport cyclique est inférieur à une plage seuil.

4. Support lisible par un processeur selon la revendication 2, dans lequel le positionnement comprend en outre les opérations consistant à :
surveiller une première amplitude (1502) du signal de réflectivité (400, 500, 600, 804, 1004, 1104, 1204) à une première fréquence de surveillance ;
surveiller une seconde amplitude (1504) du signal de réflectivité (400, 500, 600, 804, 1004, 1104, 1204) à une seconde fréquence de surveillance ;
déterminer une différence entre la première amplitude et la seconde amplitude (1506) ;
déplacer le point laser (308) dans une première direction radiale (1508) si la première amplitude est supérieure à la seconde amplitude et la différence dépasse un seuil minimum ; et
déplacer le point laser (308) dans la seconde direction radiale (1510) si la seconde amplitude est supérieure à la première amplitude et la différence dépasse le seuil minimum.

5. Support lisible par un processeur selon la revendication 2, dans lequel le positionnement comprend en outre les opérations consistant à :
surveiller une fréquence des impulsions d'amplitude du signal de réflectivité (400, 500, 600, 804, 1004, 1104, 1204) ;
déterminer une phase des impulsions d'amplitude ; et
déplacer le point laser (308) dans une première direction radiale en fonction de la fréquence et de la phase.

6. Procédé de repérage d'une position de référence radiale sur la surface d'un disque optique sans piste comprenant les opérations consistant à :
localiser (1302) un motif de référence (300, 700) sur une face sans piste (146) d'un disque optique (126) ;
balayer (1304) le motif de référence (300, 700) avec un laser (308) ; et
positionner (1306) le laser (308) en une position de référence radiale sur le disque optique (126) en fonction du balayage.

7. Dispositif pour disque optique (102) comprenant :
des moyens de localisation (1302) d'un motif de référence (300, 700) présent sur une face non gravable (146) d'un disque optique (126) ;
des moyens de balayage (1304) du motif de référence (300, 700) avec un point laser (308) ; et
des moyens de positionnement (1306) du point laser (308) en une position radiale absolue sur le disque optique (126) conformément au balayage.

8. Dispositif pour disque optique (102) selon la revendication 7, comprenant en outre :
des moyens de direction du point laser (308) sur le motif de référence (300, 700) durant la rotation du disque optique ;
des moyens de captation de la lumière réfléchie tandis que le motif de référence (300, 700) aborde le point laser (308) ; et
des moyens de génération d'un signal de réflectivité (400, 500, 600, 804, 1004, 1104, 1204) à partir de la lumière réfléchie.

9. Dispositif pour disque optique (102) selon la revendication 8, dans lequel le moyen de positionnement comprend en outre :
des moyens de surveillance d'un rapport cyclique du signal de réflectivité (400, 500, 600, 804, 1004, 1104, 1204) ;
des moyens de déplacement du point laser (308) dans une première direction radiale si le rapport cyclique est supérieur à une plage seuil ; et
des moyens de déplacement du point laser (308) dans la seconde direction radiale si le rapport cyclique est inférieur à la plage seuil.

10. Dispositif pour disque optique (102) selon la revendication 8, dans lequel le moyen de positionnement comprend en outre:
des moyens de surveillance d'une première amplitude (1502) du signal de réflectivité (400, 500, 600, 804, 1004, 1104, 1204) à une première fréquence de surveillance ;
des moyens de surveillance d'une seconde amplitude (1504) du signal de réflectivité (400, 500, 600, 804, 1004, 1104, 1204) à une seconde fréquence de surveillance ;
des moyens de détermination d'une différence (1506) entre la première amplitude et la seconde amplitude ;
des moyens de déplacement du point laser (308) dans une première direction radiale si la première amplitude est supérieure à la seconde amplitude et la différence dépasse un seuil minimum ; et
des moyens de déplacement du point laser (308) dans la seconde direction radiale si la seconde amplitude est supérieure à la première amplitude et la différence dépasse le seuil minimum.

11. Disque optique (126) comprenant :
une face gravable (144) configurée pour stocker des données ;
une face non gravable (146) configurée pour recevoir une étiquette ;
un motif de référence (300, 700) présent sur la face non gravable (146) qui définit une zone à faible réflectivité et une zone à forte réflectivité, et qui permet le repérage d'une position radiale absolue.

12. Disque optique (126) selon la revendication 11, dans lequel le motif de référence (300, 700) est positionné sur la face non gravable (146) en au moins un emplacement choisi parmi le groupe comprenant :
un diamètre intérieur extrême (304) du disque optique (126) ; et
un diamètre extérieur extrême (302) du disque optique (126).

13. Disque optique (126) selon la revendication 11, dans lequel le motif de référence (300, 700) comprend un motif en dents de scie (300) à pointes et à creux définissant une interface inclinée entre la zone à faible réflectivité et la zone à forte réflectivité et dans lequel le rayon du disque optique (126) varie le long de l'interface inclinée.

14. Disque optique (126) selon la revendication 11, dans lequel le motif de référence (700) comprend en outre :
une première rangée de barres à faible réflectivité (806, 1000, 1102, 1200) ; et
une seconde rangée de barres à faible réflectivité (808, 1002, 1100, 1202) contiguë à la première rangée et déphasée de 180 degrés par rapport à la première rangée.

15. Disque optique (126) selon la revendication 14, dans lequel le motif de référence (700) comprend en outre un champ de synchronisation temporelle (800) avant la première rangée et la seconde rangée, le champ de synchronisation temporelle (800) comprenant une troisième rangée de barres à faible réflectivité (800).
